# EUROPEAN PATENT APPLICATION

(11) **EP 1 454 962 A1**
(43) Date of publication of application: **08.09.2004**
(21) Application number: 02770210.9
(22) Date of filing: 25.09.2002
(51) Int. Cl.: C08L 101/00, C08K 3/00, C08L 83/04, C08J 5/18

(54) **THERMOSETTING RESIN COMPOSITION WITH LOW THERMAL EXPANSION AND RESIN FILM**

(30) Priority: 25.09.2001 JP 2001291635
(71) Applicant: Hitachi Chemical Co., Ltd., Shinjuku-ku, Tokyo 163-0449 (JP)
(72) Inventor: TAKAHASHI, Atsushi, Hitachi Chemical CO., LTD., Ibaraki 308-8521 (JP); BABA, Hideo, HITACHI CHEMICAL CO., LTD., Ibaraki 308-8521 (JP); MADARAME, Ken, HITACHI CHEMICAL CO., LTD., Ibaraki 308-8521 (JP); NAKAKO, Hideo, HITACHI CHEMICAL CO., LTD., Ibaraki 308-8521 (JP); TAKANO, Nozomu, HITACHI CHEMICAL CO., LTD., Ibaraki 308-8521 (JP)
(74) Representative: HOFFMANN - EITLE
(86) International application number: PCT/JP2002/009819
(87) International publication number: WO 2003/029353

(57) **Abstract**

The invention relates to a thermosetting resin composition comprising: a binder containing a thermosetting resin having a storage elastic modulus of 1,000 MPa or less at 20°C and an elongation of 10% or more at 20°C; and an inorganic filler in an amount of 100 to 2,000 parts by weight with respect to 100 parts by weight of the binder. According to the invention, it provides a thermosetting resin composition and resin film which have a low thermal expansion coefficient and able to possess a low elastic modulus, a high extensibility, and a low thermal expansion coefficient.

## Description

### Technical Field

The present invention relates to a thermosetting resin composition of a low thermal expansibility and a resin film, which is able to possess all of a low elastic modulus, a high extensibility and a low thermal expansion coefficient.

### Background Art

Along with the widespread use of personal computers and mobile phones, increasing the density of electronic parts for use in such devices is demanded. Under such circumstances, printed boards and the like are required to have higher reliability than before. In particular, it is required to improve heat resistance which has a direct influence on reflow resistance, low hygroscopicity, low stress, and a low thermal expansibility which has a direct influence on connection reliability between layers and at mounting.

Heretofore, the excellent heat resistance, the low hygroscopicity and a low thermal expansion coefficient have been achieved by the use of inorganic materials. In this regard, for the purpose of achieving these characteristics at lower costs, a method of utilizing organic materials has been investigated. An example of such a method uses a surface treatment agent such as a silane coupling agent. The silane coupling agent has a structure in which an organic functional group is bonded to a hydrolysable alkoxy group. Therefore, the alkoxy group reacts with the surface of an inorganic material, and the organic functional group reacts with an organic polymer. In consequence, there is accomplished a function of bonding an inorganic component to an organic component to improve an adhesiveness between the inorganic material and the organic polymer.

Moreover, for further improvement of the adhesive properties of the interface between the inorganic material and the organic polymer, investigation has been made. In order to improve the adhesive properties, there is, for example, a method in which a kind and number of an organic functional group contained in a usual silane coupling agent are adjusted to enhance reactivity with the organic polymer (Japanese Patent Application Laid-open No. 230729/1988 and Japanese Patent Publication No. 40368/1987). However, it has been difficult to reduce residual stress developed in the interface by simply enhancing the reactivity with the organic polymer.

As an improved method for reducing the residual stress in the interface, a method using a long-chain polysiloxane together with the surface treatment agent is disclosed (Japanese Patent Application Laid-open Nos. 62845/1991 and 287869/1991). However, such a method has a problem that the long-chain polysiloxane reduces the adhesive properties of the interface. On the other hand, another method has been disclosed in which a chain polysiloxane having both of an alkoxyl group which reacts with an inorganic material and an organic functional group which reacts with an organic polymer is used as a surface treatment agent for the inorganic material (Japanese Patent Application Laid-open No. 204953/1989). However, it is difficult for such a chain polysiloxane to reduce the stress in the interface in accordance with the length of the chain.

In a prepreg using a substrate such as a glass substrate, it is known that the use of a silicone polymer subjected to a three-dimensional condensation reaction and having one or more functional groups which react with a hydroxyl group on the surface of an inorganic material and one or more organic functional groups which react with an organic polymer, as a dispersing agent or a surface treatment agent for substrates, is effective as means for achieving both of low stress properties and adhesion properties of the interface between the inorganic material and the organic material (Japanese Patent Application Laid-open Nos. 121363/1998, 60951/1999, and 106530/1999).

In the meantime, as a resin composition for printed circuit boards, metal-clad laminates, prepregs, and sealing materials, an epoxy resin or a phenol resin having rigidity at room temperature is usually used. Among them, the resin composition for sealing materials containing a large amount of an inorganic filler cannot be formed into a very thin film, that is, it cannot be used for other purposes. Further, since the thermosetting resin such as an epoxy resin or a phenol resin has rigidity, a low thermal expansion coefficient of the resin composition can be achieved by adding an inorganic filler. However, it is difficult to impart a low elastic modulus and a high extensibility to the thermosetting resin. In a case where an elastomer is mixed with an epoxy resin or a phenol resin for the purpose of imparting a low elastic modulus and a high extensibility, there is a problem in that disadvantages occur (e.g., low thermal expansibility is impaired, and water absorbency is increased). For those reasons, a material useful to various electronic parts such as semiconductor chips, that is, a novel film formable resin material which possesses low stress properties and a low thermal expansion coefficient by itself regardless of the type of substrates.

### Disclosure of the Invention

The present invention relates to a novel material having the merits of each of inorganic materials and organic materials. That is, the present invention relates to a resin composition and a resin film, which is able to contain a large amount of an inorganic component to achieve excellent heat resistance and low hygroscopicity, and is able to possess three characteristics, a low elastic modulus, a high extensibility, and a low thermal expansion coefficient.

Specifically, the present invention relates to the following articles.
(1) A thermosetting resin composition comprising: a binder containing a thermosetting resin having a storage elastic modulus of 1,000 MPa or less at 20°C and an elongation of 10% or more at 20°C; and an inorganic filler in an amount of 100 to 2,000 parts by weight with respect to 100 parts by weight of the binder.
(2) The thermosetting resin composition of (1), wherein the binder contains a thermosetting silicone polymer as a main component.
(3) The thermosetting resin composition of (2), wherein the thermosetting silicone polymer contains a thermosetting silicone oil.
(4) The thermosetting resin composition of (2), wherein the thermosetting silicone polymer contains a compound represented by the following general formula (I): 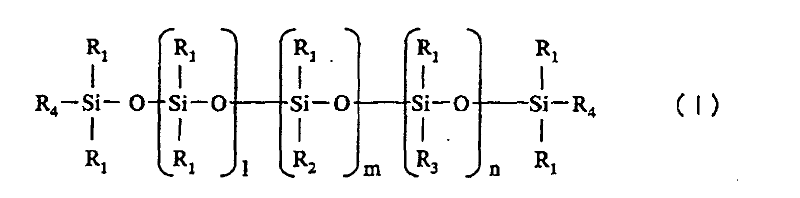 wherein R₁ is a monovalent hydrocarbon group; R₂ is an organic functional group; R₃ is a monovalent hydrocarbon group or a phenyl group; R₄ is a monovalent hydrocarbon group or an organic functional group; the plural R₁s may be the same or different ; when the plural R₂s are present, they may be the same or different; when the plural R₃s are present, they may be the same or different; and the two R₄s may be the same or different; and 1, m and n are each an integer of 1 or more.
(5) The thermosetting resin composition of (2) or (3), wherein the thermosetting silicone polymer contains a three-dimensionally cross-linked silicone polymer having one or more functional groups which react with a hydroxyl group on the surface of the inorganic filler and one or more thermosetting functional groups.
(6) The thermosetting resin composition of any one of (1) to (5), wherein the binder component contains a modifier for modifying the surface of the inorganic filler which is selected from the group consisting of: a three-dimensionally cross-linked silicone polymer having no thermosetting functional group; and a coupling agent of a silane containing coupling agent, a titanate containing coupling agent or an aluminate containing coupling agent.
(7) The thermosetting resin composition of any one of (1) to (6), wherein the binder contains an elastomer whose both terminals are modified with a silyl group.
(8) A resin film which is obtainable by forming the thermosetting resin composition of any one of (1) to (7).
(9) A resin film in which particles of an inorganic filler are bonded with a binder comprising a thermosetting resin having a storage elastic modulus of 1,000 MPa or less at 20°C and an elongation of 10% or more at 20°C.
(10) A cured product and a resin film in which particles of an inorganic filler are bonded with a binder comprising a thermosetting resin having a storage elastic modulus of 1,000 MPa or less at 20°C and an elongation of 10% or more at 20°C, and which have an elastic modulus of 10 GPa or less at 20°C.
(11) A cured product and a resin film in which particles of an inorganic filler are bonded with a binder comprising a thermosetting resin having a storage elastic modulus of 1,000 MPa or less at 20°C and an elongation of 10% or more at 20°C, and which have a thermal expansion coefficient of 100 ppm/K or less at 20°C after curing.
(12) A cured product and a resin film which comprise a composition containing: a binder containing a thermosetting resin having a storage elastic modulus of 1,000 MPa or less at 20°C; and an inorganic filler in an amount of 100 to 2,000 parts by weight with respect to 100 parts by weight of the binder, and wherein the composition has an elastic modulus of 10 GPa or less at 20°C after curing.
(13) A cured product and a resin film which comprise a composition containing: a binder containing a thermosetting resin having a storage elastic modulus of 1,000 MPa or less at 20°C; and an inorganic filler in an amount of 100 to 2,000 parts by weight with respect to 100 parts by weight of the binder, and wherein the composition has a thermal expansion coefficient of 100 ppm/K or less at 20°C after curing.

The present disclosure relates to subject matter contained in Japanese Patent Application No.2001-291635, filed on September, 25, 2001, the disclosure of which is expressly incorporated herein by reference in its entirety.

### Best Mode for Carrying out the Invention

In the present invention, a thermosetting resin composition containing: a thermoplastic resin, as a binder, having a storage elastic modulus of 1,000 MPa or less at 20°C and an elongation of 10% or more at 20°C; and a large amount of an inorganic filler, is used. The use of such a thermosetting resin composition makes it possible to form a resin film capable of achieving a low elastic modulus, a high extensibility, and a low thermal expansion coefficient in a wide temperature range. Such a resin film is useful as a member which reduces and relaxes thermal stress. For example, in a case where this resin film is used as a resin material on which a semiconductor chip or the like is to be mounted, thermal stress can be reduced by narrowing the difference between the thermal expansion coefficient of the semiconductor chip and the thermal expansion coefficient of the resin material. Also, thermal stress can be relaxed by virtue of its high extensibility so that reflow cracking can be prevented from occurring. The thermal expansion coefficient of the resin film can be adjusted by changing the amount of the inorganic filler to be mixed. In terms of an effective reduction in thermal stress resulting from the difference of thermal expansion coefficients, a preferred range of the value of elongation of the thermosetting resin composition measured according to a tensile test after curing is 1.0% or more.

### (Binder)

As described above, the thermosetting resin composition of the present invention contains a thermosetting resin, as a binder, having a storage elastic modulus of 1,000 MPa or less at 20°C, and an elongation of 10% or more at 20°C. In this specification, the "thermosetting resin" means a resin which has not yet been cured, that is, a resin in a non-cured state. Further, the "storage elastic modulus" and "elongation" mean the storage elastic modulus and elongation of a cured thermosetting resin, respectively.

An example of the thermosetting resin includes a resin containing a silicone polymer, as a main component, having a thermosetting functional group (hereinafter referred to as a "thermosetting silicone polymer"). In the present invention, the thermosetting functional group usually means a functional group which acts at the time when the thermosetting resin is subjected to reaction (curing), that is, a reactive organic group which reacts with a curing agent or a cross-linking agent, a self-curing reactive organic group, an organic group for improving the dispersibility of the inorganic filler and heat resistance, or a group which reacts with a hydroxyl group. Examples of such a thermosetting functional group include an epoxy group and an amino group.

### (Three-dimensionally cross-linked thermosetting silicone polymer)

As the above-described thermosetting silicone polymer, a silicone polymer which is three-dimensionally cross-linked and contains one or more functional groups which react with a hydroxyl group on the surface of the inorganic filler and one or more of the thermosetting functional groups (referred to as a "three-dimensionally cross-linked thermosetting silicone polymer" in the present invention) can be used.

Here, the three-dimensionally cross-linked thermosetting silicone polymer is represented by the general formula (II):

R'ₘ (H)ₖ SiX₄₋₍ₘ₊ₖ₎ (II)

wherein X is a group which is hydrolyzed to generate an OH group, such as halogen (e.g., chlorine or bromine) or -OR; R is an alkyl group having 1 to 4 carbon atoms or an alkylcarbonyl group having 1 to 4 carbon atoms; R' is a non-reactive group such as an alkyl group having 1 to 4 carbon atoms or an aryl group (e.g., a phenyl group); k is 1 or 2; m is 0 or 1; and m+k is 1 or 2. Such a silicone polymer can be obtained by reacting a silane compound with a hydrosilylation agent. The silane compound represented by the general formula (II) is converted into an Si-H group-containing silicone polymer as a result of hydrolysis and polycondensation. Then, a hydrosilylation reaction is caused between an Si-H group of the Si-H group-containing silicone polymer and the hydrosilylation agent, to obtain a three-dimensionally cross-linked thermosetting silicone polymer into which the thermosetting functional group has been introduced.

Further, an alkoxysilane compound represented by the general formula (III) can be used with the Si-H group-containing silane compound represented by the general formula (II):

R'ₙ SiX₄₋ₙ (III)

Wherein R' and X are the same as those defined in the general formula (II), and n is an integer of 0 to 2.

Examples of the Si-H group-containing silane compound represented by the general formula (II) include:
alkyldialkoxysilanes such as HCH₃Si(OCH₃)₂, HC₂H₅Si(OCH₃)₂, H₃CH₇Si(OCH₃)₂, HC₄H₉Si(OCH₃)₂, HCH₃Si(OC₂H₅)₂, HC₂H₅Si(OC₂H₅)₂, HC₃H₇Si(OC₂H₅)₂, HC₄H₉Si(OC₂H₅)₂, HCH₃Si(OC₃H₇)₂, HC₂H₅Si(OC₃H₇)₂, HC₃H₇Si(OC₃H₇)₂, HC₄H₉Si(OC₃H₇)₂, HCH₃Si(OC₄H₉)₂, HC₂H₅Si(OC₄H₉)₂, HC₃H₇Si(OC₄H₉)₂, and HC₄H₉Si(OC₄H₉)₂;
dialkoxysilanes such as H₂Si(OCH₃)₂, H₂Si(OC₂H₅)₂, H₂Si(OC₃H₇)₂, and H₂Si(OC₄H₉)₂;
phenyldialkoxysilanes such as HPhSi(OCH₃)₂, HPhSi(OC₂H₅)₂, HPhSi(OC₃H₇)₂, and HPhSi(OC₄H₉)₂ (where "Ph" represents a phenyl group, and the same shall apply to the following);
bifunctional silane compounds such as dialkoxysilanes e.g., H₂Si(OCH₃)₂, H₂Si(OC₂H₅)₂, H₂Si(OC₃H₇)₂, and H₂Si(OC₄H₉)₂ (hereinafter "functional" in the silane compound means inclusion of a condensation reactive functional group); and
trifunctional silane compounds such as trialkoxysilanes e.g., HSi(OCH₃)₃, HSi(OC₂H₅)₃, HSi(OC₃H₇)₃, and HSi(OC₄H₉)₃.

Examples of the silane compound represented by the general formula (III) include:
tetrafunctional silane compounds such as tetraalkoxysilanes e.g., Si(OCH₃)₄, Si(OC₂H₅)₄, Si(OC₃H₇)₄, and Si(OC₄H₉)₄; monoalkyltrialkoxysilanes such as H₃CSi(OCH₃)₃, H₅C₂Si(OCH₃)₃, H₇C₃Si(OCH₃)₃, H₉C₄Si(OCH₃)₃, H₃CSi(OC₂H₅)₃, H₅C₂Si(OC₂H₅)₃, H₇C₃Si(OC₂H₅)₃, H₉C₄Si(OC₂H₅)₃, H₃CSi(OC₃H₇)₃, H₅C₂Si(OC₃H₇)₃, H₇C₃Si(OC₃H₇)₃, H₉C₄Si(OC₃H₇)₃, H₃CSi(OC₄H₉)₃, H₅C₂Si(OC₄H₉)₃, H₇C₃Si(OC₄H₉)₃, and H₉C₄Si(OC₄H₉)₃;
phenyltrialkoxysilanes such as PhSi(OCH₃)₃, PhSi(OC₂H₅)₃, PhSi(OC₃H₇)₃, and PhSi(OC₄H₉)₃ (where "Ph" represents a phenyl group and the same shall apply to the following); monoalkyltriacyloxysilanes such as (H₃CCOO)₃SiCH₃, (H₃CCOO)₃SiC₂H₅, (H₃CCOO)₃SiC₃H₇, and (H₃CCOO)₃SiC₄H₉; trifunctional silane compounds such as monoalkyltrihalogenosilanes e.g., Cl₃SiCH₃, Cl₃SiC₂H₅, Cl₃SiC₃H₇, Cl₃SiC₄H₉, Br₃SiCH₃, Br₃SiC₂H₅, Br₃SiC₃H₇, and Br₃SiC₄H₉;
dialkyldialkoxysilanes such as (H₃C)₂Si(OCH₃)₂, (H₅C₂)₂Si(OCH₃)₂, (H₇C₃)₂Si(OCH₃)₂, (H₉C₄)₂Si(OCH₃)₂, (H₃C)₂Si(OC₂H₅)₂, (H₅C₂)₂Si(OC₂H₅)₂, (H₇C₃)₂Si(OC₂H₅)₂, (H₉C₄)₂Si(OC₂H₅)₂, (H₃C)₂Si(OC₃H₇)₂, (H₅C₂)₂Si(OC₃H₇)₂, (H₇C₃)₂Si(OC₃H₇)₂, (H₉C₄)₂Si(OC₃H₇)₂, (H₃C)₂Si(OC₄H₉)₂, (H₅C₂)₂Si(OC₄H₉)₂, (H₇C₃)₂Si(OC₄H₉)₂, and (H₉C₄)₂Si(OC₄H₉)₂; diphenyldialkoxysilanes such as Ph₂Si(OCH₃)₂, and Ph₂Si(OC₂H₅)₂;
dialkyldiacyloxysilanes such as (H₃CCOO)₂Si(CH₃)₂, (H₃CCOO)₂Si(C₂H₅)₂, (H₃CCOO)₂Si(C₃H₇)₂, and
(H₃CCOO)₂Si(C₄H₉)₂; and bifunctional silane compounds such as alkyldihalogenosilanes e.g., Cl₂Si(CH₃)₂, Cl₂Si(C₂H₅)₂, Cl₂Si(C₃H₇)₃, Cl₂Si(C₄H₉)₂, Br₂Si(CH₃)₂, Br₂Si(C₂H₅)₂, Br₂Si(C₃H₇)₂, and Br₂Si(C₄H₉)₂.

When the three-dimensionally cross-linked thermosetting silicone polymer is produced, the Si-H group-containing silane compound represented by the general formula (II) is an essential component. Among the Si-H group-containing silane compounds represented by the general formula (II) and the silane compounds represented by the general formula (III), the trifunctional silane compound or the tetrafunctional alkoxysilane compound is an essential component. A preferred tetrafunctional silane compound includes tetraalkoxysilane, a preferred trifunctional silane compound includes monoalkyltrialkoxysilane or trialkoxysilane, and a preferred bifunctional silane compound includes dialkyldialkoxysilane or alkyldialkoxysilane.

In the production of the three-dimensionally cross-linked thermosetting silicone polymer, 35 mol% or more of the Si-H group-containing alkoxysilane compound is preferably mixed with the total amount of the silane compounds. The Si-H group-containing alkoxysilane compound represented by the general formula (II) and the alkoxysilane compound represented by the general formula (III) are preferably used in a 35 to 100 mol% : 0 to 65 mol% ratio, more preferably 35 to 85 mol% : 15 to 65 mol%, with respect to the total amount of the silane compounds.

The three-dimensionally cross-linked thermosetting silicone polymer is three-dimensionally cross-linked, and the ratio of the tetrafunctional silane compound or the trifunctional silane compound among the alkoxysilane compounds represented by the general formula (III) is preferably 15 to 100 mol%, more preferably 20 to 100 mol%.

That is, among the alkoxysilane compounds represented by the general formula (III), the ratio of the bifunctional silane compound to be used is preferably 0 to 85 mol%, more preferably 0 to 80 mol%.

In particular, among the alkoxysilane compounds represented by the general formula (III), the ratio of the tetrafunctional silane compound to be used is preferably 15 to 100 mol%, more preferably 20 to 100 mol%, the ratio of the trifunctional silane compound to be used is preferably 0 to 85 mol%, more preferably 0 to 80 mol%, and the ratio of the bifunactional silane compound to be used is preferably 0 to 85 mol%, more preferably 0 to 80 mol%. If the ratio of the bifunctional silane compound exceeds 85 mol%, the chain of the three-dimensionally cross-linked thermosetting silicone polymer becomes long, and therefore there is a high possibility that the three-dimensionally cross-linked thermosetting silicone polymer is horizontally oriented to the surface of an inorganic material due to the orientation of a hydrophobic group such as a methyl group so that a rigid layer is liable to be formed, decreasing the effect of lowering stress.

The three-dimensionally cross-linked thermosetting silicone polymer is produced by subjecting the Si-H group-containing silane compound represented by the general formula (II) and the silane compound represented by the general formula (III) to hydrolysis and polycondensation, and then to a hydrosilylation reaction.

Preferred catalysts for use in hydrolysis and polycondensation include inorganic acids such as hydrochloric acid, sulfuric acid, phosphoric acid, nitric acid and hydrofluoric acid, and oraganic acids such as oxalic acid, maleic acid, sulfonic acid and formic acid. Alternatively, basic catalysts such as ammonia and trimethylammonium may be used. Although such a catalyst for hydrolysis and polycondensation is used in an appropriate amount depending on the amount of the Si-H group-containing silane compound represented by the general formula (II) and the silane compound represented by the general formula (III), a preferred range of the amount of the catalyst to be used is 0.001 to 10 mols with respect to 1 mol of the total of the Si-H group-containing silane compound represented by the general formula (II) and the silane compound represented by the general formula (III).

As a catalyst for hydrosilylation, a transition metal compound such as a platinum-containing compound, a palladium-containing compound or a rhodium-containing compound can be used. In particular, a platinum compound such as chloroplatinic acid is preferably used. Alternatively, peroxide such as zinc peroxide, calcium peroxide, hydrogen peroxide, di-tert-butyl peroxide, strontium peroxide, sodium peroxide, lead peroxide, or barium peroxide, tertiary amine, or phosphine may be used. A preferred range of such a catalyst for hydrosilylation to be used is 0.0000001 to 0.0001 mol with respect to 1 mol of the Si-H group of the Si-H group-containing alkoxysilane compound represented by the general formula (II).

The hydrosilylation agent contains a double bond for a hydrosilylation reaction, such as a vinyl group, and the thermosetting functional group. As an example of the hydrosilylation agent containing an epoxy group, allylglycidyl ether can be used. Further, as an example of the hydrosilylation agent containing an amino group, allylamine, allylamine hydrochloride, aminoalkylacrylate such as aminoethylacrylate, or aminoalkylmethacrylate such as aminoethylmethacrylate can be used. A preferred range of such a hydrosilylation agent to be used is 0.1 to 2 mols, particularly preferably 0.2 to 1.5 mols with respect to 1 mol of the Si-H group-containing alkoxysilane compound represented by the general formula (II).

Further, the above-described hydrolysis, polycondensation and hydrosilylation reaction are preferably carried out in a solvent. Examples of the solvent include: alcohol solvents such as methanol and ethanol; ether solvents such as ethylene glycol monomethyl ether; ketone solvents such as acetone, methyl ethyl ketone, methyl isobutyl ketone; amido solvents such as N,N-dimethylformamide; aromatic hydrocarbon solvents such as toluene and xylene; ester solvents such as ethyl acetate; and nitrile solvents such as butyronitrile. These solvents can be used singly or in combination of two or more.

Further, in these reactions, water may exist. The amount of water may be appropriately determined. If an excess amount of water exists, there is a problem in that the storage stability of the resulting coating liquid is lowered, and therefore the amount of water is preferably in the range of 0 to 5 mols, particularly preferably in the range of 0.5 to 4 mols, with respect to 1 mol of the total of the silane compounds.

The three-dimensionally cross-linked thermosetting silicone polymer is produced so as not to be gelled by adjusting the above-described conditions and blending.

When the three-dimensionally cross-linked thermosetting silicone polymer is used, it is preferably dissolved in the same solvent as the above-mentioned reaction solvent in terms of workability. For this purpose, the above-described reaction product solution can be used as it is, or the three-dimensionally cross-linked thermosetting silicone polymer is separated from the reaction product solution and then again dissolved in the solvent.

The three-dimensionally cross-linked thermosetting silicone polymer is not thoroughly cured or gelled but three-dimensionally cross-linked. In the present invention, cross-linking of the three-dimensionally cross-linked thermosetting silicone polymer is controlled to the extent that it can be dissolved in the reaction solvent, for example.

Therefore, a temperature in production, storage and use of the three-dimensionally cross-linked thermosetting silicone polymer is preferably room temperature or higher but 200°C or less, more preferably 150°C or less.

The three-dimensionally cross-linked thermosetting silicone polymer is produced via the Si-H group-containing silicone polymer as an intermediate. The Si-H group of the Si-H group-containing silicone polymer is introduced by an Si-H group-containing bifunctional siloxane unit (HR'SiO_{2/2} or H₂SiO _{2/2}, wherein R' is the same as previously defined, the R' groups in the silicone polymer may be the same or different, and the same shall apply to the following), or an Si-H group-containing trifunctional siloxane unit (HSiO_{3/2}). The Si-H group-containing silicone polymer contains the Si-H group-containing trifunctional siloxane unit (HSiO_{3/2}), a trifunctional siloxane unit (R'SiO_{3/2}, wherein R' is an organic group, and R groups in the silicone polymer may be the same or different), and a tetrafunctional siloxane unit (SiO_{4/2}), and contains the Si-H group-containing bifunctional siloxane unit (HR'SiO_{2/2} or H₂SiO_{2/2}) and a bifunctional siloxane unit (R'₂SiO_{2/2}) as optional components.

The three-dimensionally cross-linked thermosetting silicone polymer is preferably three-dimensionally cross-linked at a degree of polymerization of 7,000 or less, more preferably 4,000 or less, and particularly preferably 2,000 or less. In the side chain or at the terminal of the three-dimensionally cross-linked thermosetting silicone polymer, the thermosetting functional group exists, which has been introduced by a hydrosilylation reaction to the Si-H group. Here, the degree of polymerization of the thermosetting silicone polymer is calculated from the molecular weight of the polymer (in the case of a low degree of polymerization) or the number-average molecular weight measured by gel permeation chromatography utilizing a calibration curve of standard polystyrene or polyethylene glycol.

As described above, the three-dimensionally cross-linked thermosetting silicone polymer may be produced by producing the Si-H group-containing silicone polymer and then adding the hydrosilylation agent to cause a hydrosilylation reaction. Alternatively, the three-dimensionally cross-linked thermosetting silicone polymer may be produced by mixing the silane compounds and the hydrosilylation agent to cause a hydrosilylation reaction at the same time or in mid course of hydrolysis and polycondensation of the silane compounds.

### (Thermosetting silicone oil)

As the thermosetting silicone polymer, a silicone oil containing the thermosetting functional group in the molecule (referred to as a "thermosetting silicone oil" in the present invention) may be used. Here, the thermosetting silicone oil is a chain polysiloxane compound having a functional group containing an epoxy group, in the side chain or at the terminal of the chain, and a viscosity in the range of 10⁻² to 10⁴ Pa·s at 25°C. In the present invention, the viscosity was measured at 25°C using an EMD type viscometer manufactured by Tokyo Keiki K.K. As the thermosetting silicone oil, a compound represented by the following general formula (I) can be preferably used, for example. Preferably, the thermosetting silicone oil has an epoxy group as the thermosetting functional group in terms of thermosetting properties and heat resistance (referred to as an "epoxy modified silicone oil" in the present invention). The epoxy equivalent of the epoxy modified silicone oil is preferably 150 to 5,000, and more preferably 300 to 1,000. Further, the specific gravity of the epoxy modified silicone oil is preferably in the range of 0.7 to 1.3 g/cm³ at 25°C, and more preferably in the range of 0.9 to 1.1 g/cm³ at 25°C. As such a thermosetting silicone oil, a compound represented by the following general formula (I) can be used, for example: 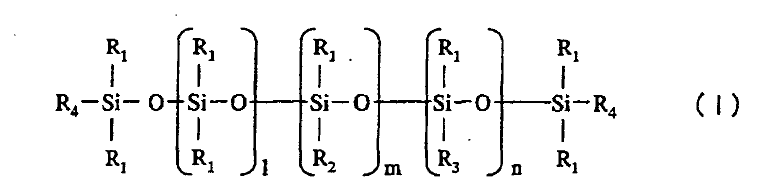 wherein R₁ is a monovalent hydrocarbon group; R₂ is an organic functional group; R₃ is a monovalent hydrocarbon group or a phenyl group; R₄ is a monovalent hydrocarbon group or an organic functional group; the plural R₁s may be the same or different; when the plural R₂s are present, they may be the same or different; when the plural R₃s are present, they may be the same or different; and the two R₄s may be the same or different; and l, m, and n are each an integer of 1 or more.

Further, the R₁ may be a monovalent alkyl group having 1 to 4 carbon atoms, the R₂ may be a thermosetting functional group, the R₃ may be a monovalent alkyl group having 1 to 4 carbon atoms, a phenyl group, or an aryl group, and the R₄ may be a monovalent hydrocarbon group, or a thermosetting organic functional group.

### (Modifier for inorganic filler)

In a case where the binder contains the thermosetting silicone oil as a main component, the binder preferably contains a modifier for the inorganic filler. The amount of the modifier to be mixed is preferably 30 parts by weight or less with respect to 100 parts by weight of the total of the thermosetting silicone oil and the modifier in consideration of the value of elongation of a resin-cured product. As such a modifier, various coupling agents such as a silane-containing coupling agent, a titanate-containing coupling agent, and an aluminate-containing coupling agent, or a three-dimensionally cross-linked silicone polymer can be used.

In a case where the inorganic filler is filled to a high degree, the three-dimensionally cross-linked silicone polymer is preferably used as the modifier in terms of the dispersibility of the inorganic filler. As such a three-dimensionally cross-linked silicone polymer, the above-described three-dimensionally cross-linked thermosetting silicone polymer, or a three-dimensionally cross-linked silicone polymer containing no thermosetting functional group (referred to as a "three-dimensionally cross-linked non-thermosetting silicone polymer" in the present invention) can be used.

In a case where the binder contains the three-dimensionally cross-linked thermosetting silicone polymer as a main component, the binder preferably contains a coupling agent as the modifier for the inorganic filler.

Here, the three-dimensionally cross-linked non-thermosetting silicone polymer contains at least one siloxane unit selected from a bifunctional siloxane unit (R₂SiO_{2/2}), a trifunctional siloxane unit (RSiO_{3/2}) (wherein R is an organic group, and the R groups in the silicone polymer may be the same or different) and a tetrafinctional siloxane unit (SiO_{4/2}), and has, at a terminal thereof, one or more functional groups which react with a hydroxyl group. The degree of polymerization of the three-dimensionally cross-linked non-thermosetting silicone polymer is preferably 2 to 7,000, more preferably 2 to 100, and particularly preferably 2 to 70. Examples of the R include an alkyl group having 1 to 4 carbon atoms, and an aromatic group such as a phenyl group. Examples of the functional group which reacts with a hydroxyl group include a silanol group, an alkoxyl group having 1 to 4 carbon atoms, an acyloxy group having 1 to 4 carbon atoms, and halogen other than bromine, such as chlorine.

Such a three-dimensionally cross-linked non-thermosetting silicone polymer can be obtained by subjecting the silane compound represented by the general formula (II) to hydrolysis and polycondensation. As the silane compound represented by the general formula (II) for use in synthesizing the three-dimensionally cross-linked non-thermosetting silicone polymer, a tetrafunctional silane compound or a trifunctional silane compound is used as an essential component, and a bifunctional silane compound is used, if necessary. In particular, a preferred tetrafunctional silane compound is tetraalkoxysilane, a preferred trifunctional silane compound is monoalkyltrialkoxysilane, and a preferred bifunctional silane compound is dialkyldialkoxysilane. A preferred ratio of the tetrafunctional silane compound or the trifunctional silane compound to be used is 15 to 100 mol%, and a preferred ratio of the bifunctional silane compound is 0 to 85 mol%. More preferably, 20 to 100 mol% of one or more of the tetrafunctional silane compound and the trifunctional silane compound, and 0 to 80 mol% of the bifunctional silane compound are used. In particular, 15 to 100 mol% of the tetrafunctional silane compound, 0 to 85 mol% of the trifunctional silane compound, and 0 to 85 mol% of the bifunctional silane compound are preferably used, and 20 to 100 mol% of the tetrafunctional silane compound and 0 to 80 mol% of the trifunctional silane compound, and 0 to 80 mol% of the bifunctional silane compound are more preferably used. As a catalyst and a solvent for hydrolysis and a polycondensation reaction, the same as those for hydrolysis and a polycondensation reaction for use in producing the three-dimensionally cross-linked thermosetting silicone polymer can be used. The three-dimensionally cross-linked non-thermosetting silicone polymer is produced so as not to be gelled by adjusting the conditions and blending. The three-dimensionally cross-linked non-thermosetting silicone polymer is not thoroughly cured or gelled but three-dimensionally cross-linked. Three-dimensional cross-linking of the three-dimensionally cross-linked non-thermosetting silicone polymer is controlled to the extent that it can be dissolved in the reaction solvent. Therefore, a temperature in production, storage, and use of the three-dimensionally cross-linked non-thermosetting silicone polymer is preferably room temperature or higher but 200°C or less, more preferably 150°C or less.

### (Combination use of three-dimensionally cross-linked thermosetting silicone polymer and silicone oil)

The three-dimensionally cross-linked thermosetting silicone polymer and the thermosetting silicone oil can be used together as the binder. As for the mixing ratio of the three-dimensionally cross-linked thermosetting silicone polymer and the thermosetting silicone oil, the ratio of the three-dimensionally cross-linked thermosetting silicone polymer is preferably 0.1 part by weight or more with respect to 100 parts by weight of the total of the three-dimensionally cross-linked thermosetting silicone polymer and the thermosetting silicone oil in terms of the dispersibility of the inorganic filler. Particularly preferably, the ratio of the three-dimensionally cross-linked thermosetting silicone polymer is 1 part by weight or more with respect to 100 parts by weight of the total of the three-dimensionally cross-linked thermosetting silicone polymer and the thermosetting silicone oil in terms of the thermal expansion coefficient and elongation. Further, in terms of the elongation, the ratio of the thermosetting silicone oil is preferably 5 parts by weight or more, particularly preferably 40 parts by weight or more, with respect to 100 parts by weight of the total of the three-dimensionally cross-linked thermosetting silicone polymer and the thermosetting silicone oil. The mixing ratio of the three-dimensionally cross-linked thermosetting silicone polymer and the thermosetting silicone oil can be determined depending on purposes in consideration of the thermal expansion coefficient and the value of elongation. Specifically, a larger mixing ratio of the three-dimensionally cross-linked thermosetting silicone polymer makes a thermal expansion coefficient smaller, and a larger mixing ratio of the thermosetting silicone oil makes a value of elongation larger.

### (Additive for binder)

The binder may contain an elastomer whose both terminals are modified with a silyl group, if necessary. The addition of the elastomer whose both terminals are modified with a silyl group improves the handleability of the resin as a film. Here, the elastomer whose both terminals are modified with a silyl group is a long chain elastomer having a weight-average molecular weight of about 3,000 to 100,000, and containing an alkoxysilyl group at both terminals of the main chain. The main chain of the elastomer is not particularly limited, and an elastomer having a main chain skeleton such as polyolefin (e.g., polyisobutylene or polypropylene), polyether (e.g., polypropyleneoxide), butadiene rubber, or acrylic rubber can be used. The alkoxysilyl group may be a group in which 1 to 3 alkoxy groups are bonded to an Si element, wherein the alkoxy group bonded to the Si element preferably has 1 to 4 carbon atoms. Examples of an elastomer whose both terminals are modified with a silyl group include SAT200 (which is a product name of polyether whose both terminals are modified with a silyl group, manufactured by KANEKA Corp.), and EP103S and EP303S (which are product names of polyisobutylene whose both terminals are modified with a silyl group, manufactured by KANEKA Corp.). When the elastomer whose both terminals are modified with a silyl group is used, the amount thereof is preferably 0.01 to 30 parts by weight, particularly preferably 0.01 to 20 parts by weight, of 100 parts by weight of the total of the binder. If the amount of the elastomer whose both terminals are modified with a silyl group is less than 0.01 part by weight, it is hard to have an effect, and if the amount of the elastomer whose both terminals are modified with a silyl group exceeds 30 parts by weight, the thermal expansion coefficient tends to increase.

### (Inorganic filler)

The resin to be used in the present invention preferably contains the inorganic filler in a large amount for the purpose of adjusting the thermal expansion coefficient to a small value. The inorganic filler is not limited to any specific one. Examples of the inorganic filler include calcium carbonate, alumina, titanium oxide, mica, aluminum carbonate, aluminum hydroxide, magnesium silicate, aluminum silicate, silica, short glass fibers and, and various whiskers such as aluminum borate whiskers and silicon carbide whiskers. These inorganic fillers may be used in combination of two or more. The shape and the particle size of the inorganic filler are not particularly limited, and a conventionally-used inorganic filler having a particle size of 0.001 to 50 µm can be used in the present invention. Preferably, the inorganic filler having a particle size of 0.01 to 10 µm is used in terms of a thinner insulating material. The amount of the inorganic filler to be mixed is preferably 100 to 2,000 parts by weight, particularly preferably 300 to 1,500 parts by weight, with respect to 100 parts by weight of the binder. The thermal expansion coefficient of a cured resin can be adjusted by changing the amount of the inorganic filler to be mixed. If the amount of the inorganic filler is too small, the thermal expansion coefficient tends to increase. If the amount of the inorganic filler is too large, film formation tends to be difficult.

### (Curing agent)

A curing agent for the resin containing the binder is not limited to any specific one, as long as the curing agent is a compound which is able to react with (cure) the thermosetting functional group contained in the main component of the binder. For example, in a case where the thermosetting functional group is an epoxy group, a usually used curing agent for epoxy resin, such as an amine-based curing agent or a phenol-based curing agent can be used. A preferred curing agent for epoxy resin is a polyfunctional phenol compound. Examples of the polyfunctional phenol compound include polyhydric phenols such as bisphenol A, bisohenol F, bisohenol S, resorcin, and catechol, and novolac resins obtained by reacting these polyhydric phenols, phenol, or a monovalent phenol comopound such as cresol with formaldehyde. The polyfunctional phenol compound may be substituted with halogen such as bromine. The amount of the curing agent to be used is preferably 0.2 to 1.5 equivalents, particularly preferably 0.5 to 1.2 equivalents, with respect to 1 equivalent of the thermosetting functional group in the binder. The curing agent for epoxy resin preferably contains an amine compound for the purpose of improving the adhesion between a cured product and a metal. Further, the curing agent is preferably contained in an excess amount. The amine compound serves as an adhesion reinforcing agent, and examples thereof will be mentioned later. The amount of the curing agent containing the amine compound is preferably 1.0 to 1.5 equivalents, particularly preferably 1.0 to 1.2 equivalents, with respect to 1 equivalent of the thermosetting functional group in the binder in consideration of a balance between adhesion properties and other characteristics such as heat resistance.

### (Curing accelerator)

A curing accelerator may be added in addition to the curing agent. For example, in a case where the thermosetting functional group is an epoxy group, an imidazole compound is usually used. Also, in the present invention, the imidazole compound can be used. Examples of the imidazole compound for use as the curing accelerator include imidazole, 2-ethylimidazole, 2-ethyl-4-methylimidazole, 2-phenylimidazole, 2-undecylimidazole, 1-benzyl-2-methylimidazole, 2-heptadecylimidazole, 4,5-diphenylimidazole, 2-methylimidazoline, 2-phenylimidazoline, 2-undecylimidazoline, 2-heptadecylimidazoline, 2-isopropylimidazole, 2,4-dimethylimidazole, 2-phenyl-4-methylimidazole, 2-ethylimidazoline, 2-isopropylimidazoline, 2,4-dimethylimidazoline, and 2-phenyl-4-methylimidazoline. For obtaining a sufficient effect of the curing accelerator, the amount of the curing accelerator to be used is preferably 0.01 part by weight or more with respect to 100 parts by weight of the binder, and in terms of the thermal expansion coefficient and elongation, the amount of the curing accelerator to be used is preferably 10 parts by weight or less with respect to 100 parts by weight of the binder.

### (Additive for resin composition)

For the purpose of enhancing adhesion with a metallic foil and enhancing the peel strength between the resin-cured product and the metallic foil, the resin composition of the present invention may contain the adhesion reinforcing agent, if necessary. As such an adhesion reinforcing agent, a compound containing plural reactive functional groups such as an amino group and a hydroxyl group can be used, and an amine compound containing the plural reactive functional groups is preferably used. Examples of the amine compound containing the plural reactive functional groups include: a compound containing plural amino groups in the molecule, such as m-phenylenediamine, 4,4'-diaminobenzanilide, or 4,4'-diamino-2,2'-dimethylbiphenyl; a compound containing plural active N-H groups in the molecule, such as dicyandiamide; and a compound containing both of an amino group and a hydroxyl group in the molecule, such as 3-amino-1-propanol, and 4-aminophenol. The amount of the adhesion reinforcing agent to be mixed is preferably in the range of 0.01 to 9 parts by weight, particularly preferably in the range of 0.1 to 6 parts by weight, with respect to 100 parts by weight of the binder. If the amount of the adhesion reinforcing agent is less than 0.01 part by weight, the addition thereof is hard to produce an effect. If the amount of the adhesion reinforcing agent exceeds 9 parts by weight, the heat resistance of the cured product tends to lower. Since the adhesion reinforcing agent also serves as a curing agent, the total amount of the adhesion reinforcing agent and another curing agent preferably lies in the above-described preferred range of the amount of the curing agent to be mixed.

### (Resin varnish)

The thermosetting resin composition of the present invention can be dissolved or dispersed in a solvent to obtain a resin varnish. The concentration of the resin varnish is appropriately determined in consideration of workability. In a case where the resin composition is prepared after the synthesis of the silicone polymer, a solvent for use in preparing the resin composition is preferably the same as that used for synthesizing the silicone polymer. Preferred examples of the solvent to be used include: alcohol-based solvents such as methanol and ethanol; ether-based solvents such as ethylene glycol monomethyl ether; ketone-based solvents such as acetone, methyl ethyl ketone, and methylisobutyl ketone; amido-based solvents such as N,N-dimethylformamide; aromatic hydrocarbon-based solvents such as toluene and xylene; ester-based solvents such as ethyl acetate; and nitrile-based solvents such as butylonitrile. These solvents can be used in combination of two or more. By applying the resin varnish onto one surface or both surfaces of a core material such as a resin film, a substrate, or a wiring board according to a conventional coating method using a screen printing machine, a blade coater, a rod coater, or a knife coater, and drying it, a resin layer made of the thermosetting resin composition of the present invention can be provided on the core material.

When the resin varnish is applied onto a carrier sheet and dried, a resin film with a carrier can be obtained. The thickness of the resin varnish when applied can be adjusted depending on purposes. When film formability and handleability are taken into consideration, the resin varnish is preferably applied so that the resin varnish after curing has a thickness of 10 to 150 µm. As a coating method for applying the varnish, a method by which shearing force can be applied in a surface direction parallel to the carrier sheet, or compressive force can be applied in a vertical direction to the surface of the carrier sheet is preferably employed. For example, a method using a blade coater, a rod coater, a knife coater, a squeeze coater, a reverse roll coater, or a transfer roll coater can be employed. A temperature at drying is preferably in the range of 80 to 200°C. The degree of curing of the resin film can be controlled by adjusting the time for drying. For example, the time for drying in a case where a semi-cured film is to be formed is preferably set to the extent that curing does not excessively progress, i.e., 1 minute or more. On the other hand, in a case where the film is to be thoroughly cured, the time for drying is preferably set to 90 minutes or more. The resin film with a carrier may be used as it is, or the carrier sheet may be peeled off from the resin film.

Examples of the carrier sheet for use in producing the resin film with a carrier include: metallic foils such as copper foil and aluminum foil; resin films such as polyester film, polyimdie film, and polyethylene terephthalate film; and carrier sheets obtained by applying a releasing agent onto the surfaces of these carrier sheets. In terms of improvement in workability, the carrier sheet is preferably subjected to a treatment with a releasing agent in a case where only the resin film made of the resin composition of the present invention is used after peeling off the carrier sheet from the resin film with a carrier, or only the carrier sheet is peeled off after the resin film with a carrier is laminated onto a substrate.

### (Cured product)

As a method of producing a cured product using the resin composition of the present invention, a usual method of curing a thermosetting resin can be used. For example, a cured product may be obtained by allowing the resin composition to stand for a fixed time period or more to be heated in a heating device such as a radiant-type heating furnace or a hot-air heating furnace. Alternatively, a cured product which adheres to another substance may be obtained by making the resin composition with a carrier or the resin composition from which a carrier has been peeled off come into contact with another substance, and then heating it for a fixed time period using a laminator capable of applying heat and pressure.

### (Evaluation method)

The elastic modulus of the binder, resin film, and resin-cured product of the present invention can be evaluated using a storage elastic modulus determined by a dynamic viscoelasticity evaluation. The dynamic viscoelasticity evaluation is a usual method for measuring the deformation behavior of a viscoelastic product such as a polymeric material. The use of a device for measuring dynamic viscoelasticity makes it possible to determine the dynamic storage elastic modulus, dynamic loss elastic modulus, and loss tangent of a sample in accordance with variations in temperature by applying sinusoidal stress or strain caused by pulling or bending to the sample. In a case where an evaluation is made on the resin film, these values can be determined by applying a tensile stress or strain to the resin film in a surface direction.

The elastic modulus according to the present invention was evaluated using the resin film having a thickness of about 50 to 150 µm, in a tensile direction to the surface direction of the resin film. The thermal expansion coefficient of the binder, resin film or resin-cured product is determined as a rate of change in volume or length of the sample while changing the temperature of the sample under a fixed load, which can be measured by a thermomechanical analysis device. The thermal expansion coefficient according to the present invention was determined by measuring variations in length of the resin film in the surface direction at various measurement temperatures by the use of the resin film having a thickness of about 50 to 150 µm.

Hereinafter, the present invention will be described in detail based on examples.

### (Synthesis Example of three-dimensionally cross-linked thermosetting silicone polymer)

20 g of tetramethoxysilane (manufactured by Tokyo Kasei Kogyo Co., Ltd.), 60 g of dimethoxydimethylsilane (manufactured by Tokyo Kasei Kogyo Co., Ltd.), 67 g of dimethoxymethylsilane (manufactured by Tokyo Kasei Kogyo Co. , Ltd. ) , and 37 g of methanol (manufactured by Tokyo Kasei Kogyo Co., Ltd.) as a synthesis solvent were placed into a glass flask equipped with a stirrer, a condenser and a thermometer, to obtain a mixed solution. 1.5 g of maleic acid as a synthesis catalyst and 50 g of distilled water were added to the mixed solution, and then the resulting mixture was stirred at 80°C for 2 hours. Further, 72 g of allylglycidyl ether (manufactured by Tokyo Kasei Kogyo Co. , Ltd. ) and 0.2 g of chloroplatinic acid salt (2 wt% isopropyl alcohol solution) were added thereto, and then the resulting mixture was stirred for 4 hours to synthesize an epoxy modified silicone polymer. The thus obtained silicone polymer had a polymerization degree of a siloxane unit of 65 (which was determined from a number-average molecular weight measured by GPC utilizing a calibration curve of a standard polystyrene).

### (Preparation Example 1 of binder)

In a glass flask equipped with a stirrer, a condenser and a thermometer, 78 parts by weight of tetrabromobisphenol A, 3 parts by weight of 2-ethyl-4-methylimidazole, and 202 parts by weight of toluene as a diluent solvent were mixed with 100 parts by weight of the solid content of a silicone polymer produced in the same manner as in Synthesis Example of the three-dimensionally cross-linked thermosetting silicone polymer, and the resulting mixture was stirred at 20°C for 1 hour to prepare a binder solution.

### (Preparation Example 2 of binder)

A binder solution was prepared in the same manner as in Preparation Example 1 of the binder except that the three-dimensionally cross-linked thermosetting silicone polymer was replaced with an epoxy modified silicone oil (manufactured by Shin-Etsu Chemical Co., Ltd. under the product name of "KF101").

### (Preparation Example 3 of binder)

A binder solution was prepared in the same manner as in Preparation Example 2 of the binder except that the epoxy modified silicone oil "KF101" (manufactured by Shin-Etsu Chemical Co., Ltd.) was replaced with an epoxy modified silicone oil (manufactured by Shin-Etsu Chemical Co., Ltd. under the product name of "X22-2000").

### (Preparation Example 4 of binder)

A binder solution was prepared in the same manner as in Preparation Example 1 of the binder except that the epoxy modified silicone oil "KF101" (manufactured by Shin-Etsu Chemical Co., Ltd.) was replaced with an epoxy resin (manufactured by Yuka Shell Epoxy K.K. under the product name of "EPICOAT 1001").

### (Preparation Example 5 of binder)

A binder solution was prepared in the same manner as in Preparation Example 1 of the binder except that the epoxy modified silicone oil "KF101" (manufactured by Shin-Etsu Chemical Co., Ltd.) was replaced with an epoxy modified silicone oil (manufactured by Shin-Etsu Chemical Co., Ltd. under the product name of "X22-1503"), and that 78 parts by weight of tetrabromobisphenol A was replaced with 30 parts by weight of bisphenol A.

### (Evaluation method 1)

Each of the binder solutions obtained in Preparation Examples 1 to 4 of a binder was applied onto a release film, and was then cured at 170°C for 2 hours, to obtain a film (cured product of the binder) having a thickness of 50 to 100 µm (that was a thickness except for the thickness of the release film). The characteristics of the thus obtained film (cured product of the binder) were measured by the following methods.

The dynamic viscoelasticity was measured using an RSA-II manufactured by RHEOMETRIC at 20°C in a tensile mode of 10 Hz under conditions where the width of the film was 5 mm, the distance between spans was 20 mm, and a strain was 0.03%.

The elongation of a sample was measured according to a tensile test using the film (having a size of 10 mm (width) × 80 mm (length) × 50 to 100 µm (thickness)) as the sample and a tensile tester (manufactured by Shimadzu Corp. under the product name of "Autograph AG-100C") at 20°C under measurement conditions of a chuck distance of 60 mm and a pulling rate of 5 mm/min. The results are shown in Table 1.

**Table 1**

| Preparation Example of binder | Elastic modulus (MPa) us | Elongation (%) |
|---|---|---|
| 1 | 500 | 30 |
| 2 | 80 | 15 |
| 3 | 50 | 20 |
| 4 | 2,500 | 3 |
| 5 | 300 | 20 |

### (Example 1)

In a glass flask equipped with a stirrer, a condenser and a thermometer, 450 parts by weight of a silica powder (manufactured by Admatechs Co., Ltd. under the product name of "SO-25R" and having an average particle size of 0.5 µm), and 202 parts by weight of toluene as a diluent solvent were mixed with 100 parts by weight of an epoxy modified silicone oil (manufactured by Shin-Etsu Cemical Co., Ltd. under the product name of "KF101"), to obtain a mixture. After being stirred at 80°C for 1 hour, the mixture was cooled to room temperature. Then, 78 parts by weight of tetrabromobisphenol A and 3 parts by weight of 2-ethyl-4-methylimidazole with respect to 100 parts by weight of the epoxy modified silicone oil were added to the mixture, and the resulting mixture was stirred at room temperature for 1 hour to prepare an inorganic filler solution (resin composition).

### (Example 2)

An inorganic filler solution (resin composition) was prepared in the same manner as in Example 1 except that 1 part by weight of γ-glycidoxypropyltrimethoxysilane (manufactured by Nippon Unicar Co., Ltd. under the product name of "A-187"), 450 parts by weight of a silica powder (manufactured by Admatechs Co. , Ltd. under the product name of "SO-25R" and having an average particle size of 0. 5 µm), 202 parts by weight of toluene as a diluent solvent, 78 parts by weight of tetrabromobisphenol A, and 3 parts by weight of 2-ethyl-4-methylimidazole were mixed with 99 parts by weight of an epoxy modified silicone oil (manufactured by Shin-Etsu Chemical Co., Ltd. under the product name of "KF101").

### (Example 3)

An inorganic filler solution (resin composition) was prepared in the same manner as in Example 1 except that 1 part by weight of an elastomer whose both terminals are modified with a silyl group (manufactured by KANEKA Corporation under the product name of "SAT200" ) , 450 parts by weight of a silica powder (manufactured by Admatechs Co. , Ltd. under the product name of "SO-25R" and having an average particle size of 0.5 µm), 202 parts by weight of toluene as a diluent solvent, 78 parts by weight of tetrabromobisphenol A, and 3 parts by weight of 2-ethyl-4-methylimidazole were mixed with 99 parts by weight of an epoxy modified silicone oil (manufactured by Shin-Etsu Chemical Co., Ltd. under the product name of "KF101").

### (Example 4)

An inorganic filler solution (resin composition) was prepared in the same manner as in Example 1 except that the epoxy modified silicone oil (manufactured by Shin-Etsu Chemical Co., Ltd. under the product name of "KF101") was replaced with an epoxy modified silicone oil (manufactured by Shin-Etsu Chemical Co., Ltd. under the product name of "X22-2000").

### (Example 5)

An inorganic filler solution (resin composition) was prepared in the same manner as in Example 1 except that the epoxy modified silicone oil (manufactured by Shin-Etsu Chemical Co., Ltd. under the product name of "KF101") was replaced with a silicone polymer produced in the same manner as in Synthesis Example of the three-dimensionally cross-linked thermosetting silicone polymer, and that 450 parts by weight of a silica powder (manufactured by Admatechs Co., Ltd. under the product name of "SO-25R" and having an average particle size of 0.5 µm), 202 parts by weight of toluene as a diluent solvent, 78 parts by weight of tetrabromobisphenol A, and 3 parts by weight of 2-ethyl-4-methylimidazole were mixed with 100 parts by weight of the solid content of the silicone polymer.

### (Example 6)

An inorganic filler solution (resin composition) was prepared in the same manner as in Example 1 except that the epoxy modified silicone oil (manufactured by Shin-Etsu Chemical Co., Ltd. under the product name of "KF101") was replaced with an epoxy resin (manufactured by Yuka Shell Epoxy K.K. under the product name of "EPICOAT1001").

### (Example 7)

An inorganic filler solution (resin composition) was prepared in the same manner as in Example 1 except that 99 parts by weight of an epoxy modified silicone oil (manufactured by Shin-Etsu Chemical Co., Ltd. under the product name of "KF101"), 900 parts by weight of a silica powder (manufactured by Admatechs Co., Ltd. under the product name of "SO-25R" and having an average particle size of 0.5 µm), 250 parts by weight of toluene as a diluent solvent, 78 parts by weight of tetrabromobisphenol A, and 3 parts by weight of 2-ethyl-4-methylimidazole were mixed with 1 part by weight of the solid content of the three-dimensionally cross-linked thermosetting silicone polymer.

### (Example 8)

An inorganic filler solution (resin composition) was prepared in the same manner as in Example 7 except that the epoxy modified silicone oil (manufactured Shin-Etsu Chemical Co., Ltd. under the product name of "KF101") was replaced with an epoxy modified silicone oil (manufactured by Shin-Etsu chemical co., Ltd. under the product name of "X22-2000").

### (Example 9)

An inorganic filler solution (resin composition) was prepared in the same manner as in Example 1 except that 900 parts by weight of a silica powder (manufactured by Admatechs Co., Ltd. under the product name of "SO-25R" and having an average particle size of 0.5 µm), 250 parts by weight of toluene as a diluent solvent, 78 parts by weight of tetrabromobisphenol A, and 3 parts by weight of 2-ethyl-4-methylimidazole were mixed with 100 parts by weight of an epoxy resin (manufactured by Yuka Shell Epoxy K.K. under the product name of "EPICOAT1001").

### (Evaluation method 2)

Each of the resin compositions obtained in Examples 1 to 9 was formed into a film in the same manner as in Evaluation method 1, and the dynamic viscoelasticity and elongation of the obtained film were evaluated in the same manner as in Evaluation method 1. The thermal expansion coefficient of the film was measured using a thermomechanical analysis device (manufactured by MAC SCIENCE under the name of "TMA") in a tensile mode under conditions that the width of the film was 5 mm and the distance between spans was 20 mm, and the thermal expansion coefficient at 20°C and the thermal expansion coefficient at 0 to 250°C were evaluated. The mark "○" in the test item of "film formability" means that characteristic evaluations of the dynamic viscoelasticity, elongation, and thermal expansion coefficient could be made on the sample, and the mark "X" means that such characteristic evaluations could not be made due to the brittleness of the sample. The results are shown in Table 2.

**Table 2**

| Example | Elastic modulus (MPa) | Elongation (%) | Thermal expansion coefficient (× 10⁻⁶/°C) Room temp. | Thermal expansion coefficient (× 10⁻⁶/°C) 0-250°C | Film formability | Remarks |
|---|---|---|---|---|---|---|
| 1 | 400 | 1.3 | 60 | 80 | ○ | |
| 2 | 500 | 1.7 | 55 | 70 | ○ | |
| 3 | 300 | 3.1 | 65 | 85 | ○ | |
| 4 | 300 | 1.7 | 50 | 60 | ○ | |
| 5 | 990 | 3.1 | 22 | 30 | ○ | |
| 6 | 15,000 | 0.5 | 50 | 120 | ○ | Comp. Ex. |
| 7 | 800 | 3.5 | 45 | 55 | ○ | |
| 8 | 600 | 3 | 30 | 40 | ○ | |
| 9 | - | - | - | - | X | Comp. Ex. |

### (Example 10)

In a glass flask equipped with a stirrer, a condenser and a thermometer, 525 parts by weight of a silica powder (manufactured by Admatechs Co. , Ltd. under the product name of "SC-2050" and having an average particle size of 0.5 µm), and 225 parts by weight of methyl ethyl ketone and 25 parts by weight of toluene as diluent solvents were mixed with 100 parts by weight of an epoxy modified silicone oil (manufactured by Shin-Etsu Chemical Co., Ltd. under the product name of "X22-1503"), to obtain a mixture. After being stirred at 80°C for 1 hour, the mixture was cooled to room temperature. Then, 30 parts by weight of bisphenol A and 1 part by weight of 2-ethyl-4-methylimidazole with respect to 100 parts by weight of the epoxy modified silicone oil were added to the mixture, and the resulting mixture was stirred at room temperature for 1 hour to prepare an inorganic filler solution (resin composition).

### (Example 11)

In a glass flask equipped with a stirrer, a condenser and a thermometer, a solution obtained by mixing 20 g of tetramethoxysilane (manufactured by Tokyo Kasei Kogyo Co. , Ltd.), 20 g of dimethoxydimethylsilane (manufactured by Tokyo Kasei Kogyo Co., Ltd.), and 10 g of methanol (manufactured by Tokyo Kasei Kogyo Co. , Ltd. ) as a synthesis solvent was mixed with 0.5 g of phosphoric acid as a synthesis catalyst and 16 g of distilled water, to synthesize a silicone polymer at 70°C.

Then, in a glass flask equipped with a stirrer, a condenser and a thermometer, 10 parts by weight of the thus obtained three-dimensionally cross-linked silicone polymer solution, 100 parts by weight of an epoxy modified silicone oil (manufactured by Shin-Etsu Chemical Co., Ltd. under the product name of "X22-1503"), 525 parts by weight of a silica powder (manufactured by Admatechs Co., Ltd. under the product name of "SC-2050" and having an average particle size of 0.5 µm), and 225 parts by weight of methyl ethyl ketone and 25 parts by weight of toluene as diluent solvents were mixed, to obtain a mixture. After being stirred at 80°C for 1 hour, the mixture was cooled to room temperature. Then, 30 parts by weight of bisphenol A and 1 part by weight of 2-ethyl-4-methylimidazole with respect to 100 parts by weight of the epoxy modified silicone oil were added to the mixture, and the resulting mixture was stirred at room temperature for 1 hour to prepare an inorganic filler solution (resin composition).

### (Example 12)

An inorganic filler solution (resin composition) was prepared in the same manner as in Example 10 except that 100 parts by weight of the epoxy modified silicone oil (manufactured by Shin-Etsu Chemical Co., Ltd. under the product name of "X22-1503") was replaced with 100 parts by weight of an epoxy modified silicone oil (manufactured by Shin-Etsu Chemical Co., Ltd. under the product name of "X22-1503") and 5 parts by weight of a silicone polymer produced in the same manner as in Synthesis Example of the three-dimensionally cross-linked thermosetting silicone polymer.

### (Example 13)

An inorganic filler solution (resin composition) was prepared in the same manner as in Example 10 except that the amount of the silica powder (manufactured by Admatechs Co., Ltd. under the product name of "SC-2050" and having an average particle size of 0.5 µm) to be mixed was changed to 780 parts by weight.

### (Evaluation method 3)

Each of the resin compositions obtained in Examples 10 to 13 was formed into a film in the same manner as in Evaluation method 1, and the dynamic viscoelasticity and elongation of the obtained film were evaluated in the same manner as in Evaluation method 1. The film formability was evaluated in the same manner as in Evaluation method 2. The thermal expansion coefficient of the film was measured using a thermomechanical analysis device (manufactured by MAC SCIENCE under the name of "TMA") in a tensile mode under conditions that the width of the film was 5 mm and the distance between spans was 20 mm, and the thermal expansion coefficient at 50 to 100°C was evaluated. The results are shown in Table 3.

**Table 3**

| Example | Elastic modulus (MPa) | Elongation (%) | Thermal expansion coefficient (× 10⁻⁶/°C) Room temp. | Film formabilit y |
|---|---|---|---|---|
| 10 | 900 | 5 | 30 | ○ |
| 11 | 1,000 | 4.5 | 28 | ○ |
| 12 | 1,000 | 4.5 | 29 | ○ |
| 13 | 1,500 | 1.5 | 15 | ○ |

As described above, according to the present invention, the use of the binder having a low elastic modulus and a high extensibility makes it possible to provide a novel thermosetting resin composition, a resin film, and a cured product, which are capable of achieving a low elastic modulus, a high extensibility, and a low thermal expansion coefficient in a wide temperature range of 0 to 250°C. Further, such a cured product has film formability even when it contains the inorganic filler in a large amount. The thermosetting resin composition and the resin film can be utilized as, for example, a resin layer having low stress properties and stress relaxation properties suitably used for substrates on which semiconductor chips are to be mounted.

## Claims

1. A thermosetting resin composition comprising:
a binder containing a thermosetting resin having a storage elastic modulus of 1,000 MPa or less at 20°C and an elongation of 10% or more at 20°C; and
an inorganic filler in an amount of 100 to 2,000 parts by weight with respect to 100 parts by weight of the binder.

2. The thermosetting resin composition according to claim 1, wherein the binder contains a thermosetting silicone polymer as a main component.

3. The thermosetting resin composition according to claim 2, wherein the thermosetting silicone polymer contains a thermosetting silicone oil.

4. The thermosetting resin composition according to claim 2 or 3, wherein the thermosetting silicone polymer contains a compound represented by the following general formula (I): 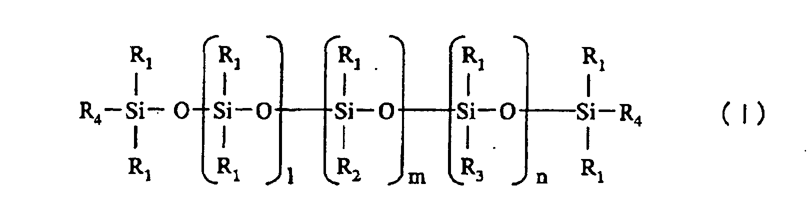 wherein R₁ is a monovalent hydrocarbon group; R₂ is an organic functional group; R₃ is a monovalent hydrocarbon group or a phenyl group; R₄ is a monovalent hydrocarbon group or an organic functional group; the plural R₁s may be the same or different; when the plural R₂s are present, they may be the same or different; when the plural R₃s are present, they may be the same or different; and the two R₄s may be the same or different; and l, m and n are each an integer of 1 or more.

5. The thermosetting resin composition according to claim 2 or 3, wherein the thermosetting silicone polymer contains a three-dimensionally cross-linked silicone polymer having one or more functional groups which react with a hydroxyl group on the surface of the inorganic filler and one or more thermosetting functional groups.

6. The thermosetting resin composition according to any one of claims 1 to 5, wherein the binder component contains a modifier for modifying the surface of the inorganic filler which is selected from the group consisting of: a three-dimensionally cross-linked silicone polymer having no thermosetting functional group; and a coupling agent of a silane containing coupling agent, a titanate containing coupling agent or an aluminate containing coupling agent.

7. The thermosetting resin composition according to any one of claims 1 to 6, wherein the binder contains an elastomer whose both terminals are modified with a silyl group.

8. A resin film which is obtainable by forming the thermosetting resin composition according to any one of claims 1 to 7.

9. A resin film in which particles of an inorganic filler are bonded with a binder comprising a thermosetting resin having a storage elastic modulus of 1,000 MPa or less at 20°C and an elongation of 10% or more at 20°C.

10. A cured product and a resin film in which particles of an inorganic filler are bonded with a binder comprising a thermosetting resin having a storage elastic modulus of 1,000 MPa or less at 20°C and an elongation of 10% or more at 20°C, and which have an elastic modulus of 10 GPa or less at 20°C.

11. A cured product and a resin film in which particles of an inorganic filler are bonded with a binder comprising a thermosetting resin having a storage elastic modulus of 1,000 MPa or less at 20°C and an elongation of 10% or more at 20°C, and which have a thermal expansion coefficient of 100 ppm/K or less at 20°C after curing.

12. A cured product and a resin film which comprise a composition containing
a binder containing a thermosetting resin having a storage elastic modulus of 1,000 MPa or less at 20°C and
an inorganic filler in an amount of 100 to 2,000 parts by weight with respect to 100 parts by weight of the binder, and
wherein the composition has an elastic modulus of 10 GPa or less at 20°C after curing.

13. A cured product and a resin film which comprise a composition containing
a binder containing a thermosetting resin having a storage elastic modulus of 1,000 MPa or less at 20°C and
an inorganic filler in an amount of 100 to 2,000 parts by weight with respect to 100 parts by weight of the binder,
wherein the composition has a thermal expansion
coefficient of 100 ppm/K or less at 20°C after curing.
